# EUROPÄISCHE PATENTSCHRIFT

(11) **EP 2 498 077 B1**
(45) Veröffentlichungstag und Bekanntmachung des Hinweises auf die Patenterteilung: **18.06.2014**
(21) Anmeldenummer: 11405230.1
(22) Anmeldetag: 08.03.2011
(51) Int. Cl.: G01N 3/08

(54) **Testapparatur zum mechanischen Prüfen von Bauteilen und Materialproben**
Test apparatus for mechanical testing of components and material samples
Appareil de test pour la vérification mécanique de composants et d'échantillons de matériaux

(43) Veröffentlichungstag der Anmeldung: 12.09.2012
(73) Patentinhaber: THELKIN AG, 8406 Winterthur (CH)
(72) Erfinder: Schwenke, Thorsten Dr., 8406 Winterthur (CH)
(74) Vertreter: Roshardt, Werner Alfred

(56) Entgegenhaltungen:
- DE-A1- 2 656 941
- DE-A1- 10 206 710
- US-A- 3 994 158
- US-A- 5 438 863
- US-A- 5 877 432

## Beschreibung

### Technisches Gebiet

Die Erfindung betrifft eine Testapparatur und ein Testverfahren zum Prüfen von Proben (d. h. Bauteilen und Materialproben) durch mechanische Einwirkung auf die Probe. Die Testapparatur umfasst einen Probenbereich und einen Zylinder, welcher relativ zum Probenbereich beweglich ist, einen Linearantrieb mit einem ersten Antriebsteil, welcher ortsfest bezüglich eines ihm zugewandten Endes des Probenbereichs ist, und einem relativ zum ersten Antriebsteil beweglichen und angetriebenen zweiten Antriebsteil, welcher ortsfest bezüglich des Zylinders ist.

### Stand der Technik

Testapparaturen zur mechanischen Prüfung von Proben werden in Industrie und Forschung standardgemäss eingesetzt, beispielsweise zur Materialprüfung oder in Belastungs-, Ermüdungs- und Abnutzungstests. Unter Proben sind Bauteile und Materialproben zu verstehen. Um eine Vielzahl von mechanischen Bewegungen bzw. Belastungen in nützlicher Frist ausführen zu können, werden die Testapparaturen meist mit einer relativ hohen Frequenz betrieben - typischerweise in der Grössenordnung von 10 Hz.

Herkömmliche Testapparaturen werden zum Teil pneumatisch und vor allem auch hydraulisch angetrieben, weil diese Antriebsarten die gefordert hohen Frequenzen erlauben und gleichzeitig über genug Kraft verfügen (üblicherweise erfolgen die mechanischen Prüfungen in einem Bereich von einigen hundert Newton bis einigen tausend Newton). Allerdings benötigen insbesondere hydraulisch angetriebene Testapparaturen viel Platz und viel Infrastruktur, beispielsweise sind die grossen Hydraulikpumpen meist als separates Bauteil ausgebildet und benötigen 3-Phasen-Strom-Anschlüsse sowie Kühlwasser in grossen Mengen. Zudem sind die Unterhalts- und Wartungskosten hoch.

Aus diesem Grund werden auch gerne alternative Arten von Linearantrieben eingesetzt, und insbesondere servo-elektrische Linearmotoren, welche dank technologischen Fortschritten mittlerweile nicht nur ausreichend grosse Hübe und hohe Frequenzen aufweisen, sondern neu auch über ausreichend Kraft verfügen und noch dazu wartungsarm sind. Beispielsweise beschreibt die Patentschrift US 5 877 432 A (Univ. Dayton) als Stand der Technik elektrodynamische Schwingungserreger (elektrodynamic shaker) als Linearantrieb, wobei die Schwingungserreger auf elektrodynamischen Linearmotoren basieren. Da Linearmotoren grosse bewegliche Massen aufweisen und die beweglichen Teile gelagert werden müssen (üblicherweise durch Kugellager), schlägt die US 5 877 432 A (Univ. Dayton) vor, statt Schwingungserregern magnetostriktive Linearantriebe zu verwenden.

Die US 5 877 432 A (Univ. Dayton) offenbart abgesehen von verschiedenen Linearantriebsarten auch den üblichen Aufbau der Testapparatur, welcher in beinahe allen Ausführungsformen verwendet wird: die Testapparatur weist einen Prüfbereich und einen sich relativ zum Prüfbereich bewegenden Zylinder auf. Der Zylinder ist mit einem Linearantrieb verbunden und wird durch ihn angetrieben, wobei die Längsachse des Zylinders auf der Längsachse des Linearantriebs liegt. Der Prüfbereich ist auf mindestens einer Seite durch eine verstellbare Wand begrenzt, meist durch eine verstellbare Decke, welche den Prüfbereich gegen oben begrenzt und oft auch als Querhaupt bezeichnet wird. Der Linearantrieb ist mit der verstellbaren Wand bzw. Decke verbunden und ist dadurch relativ zum Prüfbereich bewegbar, so dass der Zylinder an verschiedenen Stellen im Prüfbereich positioniert werden kann bzw. der Prüfbereich in seiner Dimension entsprechend einer Anwendung verändert werden kann. Die verstellbare Wand bzw. Decke wird dabei üblicherweise durch zwei Träger gehalten, wobei die Träger häufig säulenähnliche Stützen ausgebildet sind und die Längsachse des Linearantriebs (vorzugsweise mittig) zwischen den Trägern liegt. Der Linearantrieb und die verstellbare Wand können entlang der Träger bewegt werden, wofür wegen des hohen Gewichts von verstellbarer Wand und Linearantrieb häufig separate und zusätzliche Antriebe vorgesehen sind. Die verstellbare Wand und der Linearantrieb können auch an den Trägern arretiert werden, wobei die Arretierungen eine hohe Festigkeit aufweist. Die Arretierung arbeitet üblicherweise dadurch, dass die verstellbare Wand lösbar an den Trägern festgeklemmt wird, beispielsweise durch pneumatisch betriebene Klemmvorrichtungen. Zudem ist die Arretierung häufig mit Sensoren überwacht.

US 5,438,863 A offenbart eine Vorrichtung zum Messen von spezifischen Eigenschaften eines Materials. Die gezeigte Vorrichtung umfasst einen Probebereich und einen relativ zu diesem beweglichen Zylinder. Zum Bewegen des Zylinders weist die Vorrichtung zwei vertikal angeordnete, drehbar gelagerte Gewindestangen auf, welche über einen Riemen von einem Motor in Drehung versetzt werden können. Der Zylinder ist über eine Brücke mit zwei auf den Gewindestangen angebrachten Muttern starr verbunden.

DE 26 56 941 A1 beschreibt eine hydraulische Universalprüfmaschine mit mehreren Kolbenstangen sowie auf den Kolbenstangen beweglichen Zylindern, wobei je nach der Leistungsanforderung die Anzahl der Kolbenstangen und der beweglichen Zylinder erhöht oder vermindert werden kann. Die Maschine verfügt zudem über eine Grundplatte sowie über ein Querhaupt, welches fest mit den Zylindern verbunden ist. Ferner sind zwei Spannköpfe vorhanden, mit denen sich ein Prüfling einspannen lässt.

US 3,994,158 A offenbart eine hydraulische Prüfvorrichtung mit zwei Zylindern, welche auf zwei Kolbenstangen beweglich angeordnet sind. Die Kolbenstangen sind in einer Grundplatte verankert und an ihrem oberen Ende mit einer z.B. plattenförmigen Traverse verbunden, so dass ein starrer Rahmen gebildet wird. Die Zylinder sind über ein Querhaupt miteinander verbunden und werden hydraulisch entlang der Kolbenstangen vertikal verschoben. Der Prüfling wird zwischen einem unteren Spannfutter der Grundplatte sowie einem oberen Spannfutter am Querhaupt eingespannt und kann durch Verschieben der Zylinder den gewünschten Zug- oder Druckkräften ausgesetzt werden.

DE 102 06 710 A1 befasst sich mit einer Vorrichtung zum Messen der Wärmebildung in einem Autoreifen-Gummimaterial. Auf dem oberen Querträger eines stationären Grundgestells, welches als starrer Rahmen ausgebildet ist, ist eine Stahlplatte gelagert, welche die eigentliche Messvorrichtung trägt.

Die bekannten Testapparaturen haben den Nachteil, dass sie gross, kompliziert gebaut, fehleranfällig und teuer sind. Zudem sind die Testapparaturen umständlich in Wartung und Reinigung. Hydraulische Antriebe brauchen viel Infrastruktur und Platz und sind aufwendig im Unterhalt, Linearmotoren mit der geforderten Kraft sind gross und schwer und müssen aufwendig gekühlt werden, und alternative Antriebe wie etwa magnetostriktive Antriebe erfüllen nicht alle Anforderungen an Hub, Geschwindigkeit und Kraft. Diverse Hilfsmechanismen und Überwachungssysteme komplizieren den Aufbau.

### Darstellung der Erfindung

Aufgabe der Erfindung ist es, eine dem eingangs genannten technischen Gebiet zugehörende Testapparatur zu schaffen, welche kompakt und einfach gebaut ist, einfache und günstige Wartung und Reinigung erlaubt und eine niedrige Fehleranfälligkeit zeigt.

Die Lösung der Aufgabe ist durch die Merkmale des Anspruchs 1 definiert. Gemäss der Erfindung umfasst eine Testapparatur zum Prüfen von Proben durch mechanische Einwirkung auf die Probe einen Probenbereich und einen Zylinder, welcher relativ zum Probenbereich beweglich ist. Ausserdem umfasst die Testapparatur einen Linearantrieb mit einem ersten Antriebsteil, welcher ortsfest bezüglich des eines ihm zugewandten Endes Probenbereichs ist, und einem relativ zum ersten Antriebsteil beweglichen und angetriebenen zweiten Antriebsteil, welcher ortsfest bezüglich des Zylinders ist. Die Testapparatur umfasst aber auch mindestens einen weiteren Linearantrieb mit einem ersten Antriebsteil, welcher ortsfest bezüglich des ihm zugewandten Endes des Probenbereichs ist, und einem relativ zum ersten Antriebsteil beweglichen und angetriebenen zweiten Antriebsteil, welcher ortsfest bezüglich des Zylinders ist. Dabei sind die Linearantriebe der Testapparatur derart angeordnet, dass wenn sich ein zweiter Antriebsteil eines Linearantriebs in einer nicht ausgelenkten Ausgangsstellung befindet sich auch alle anderen zweiten Antriebsteile der anderen Linearantriebe in ihrer nicht ausgelenkten Ausgangsstellung befinden.

Mit Proben sind dabei mechanisch feste Bauteile und Materialproben gemeint, es werden aber keine Flüssigkeiten geprüft (keine rheologischen Tests). Die Probe kann aber während der Prüfung in der Testapparatur von einem Fluid und insbesondere einer Flüssigkeit umgeben sein, bei gewissen Anwendungen vorteilhafterweise von einer salzhaltigen Wasserlösung bei menschlicher Körpertemperatur, um beispielsweise Bedingungen wie im Innern eines menschlichen Körpers zu simulieren. Der Zylinder übt zum Prüfen der Probe Druck und/oder Zug auf die Probe aus; unter mechanischer Einwirkung ist eine Bewegung und/oder Kompression bzw. Dehnung der Probe zu verstehen. Dabei wird eine Kraftübertragung vom Zylinder auf die Probe durch mindestens eine kraftschlüssige Verbindung von Probe und Zylinder und mindestens eine kraftschlüssige Verbindung von Probe und einem Rand des Probenbereichs gewährleistet. Der Probenbereich kann beispielsweise als ein abgeschlossener oder offener Prüfraum ausgestaltet sein, bzw. kann der Probenbereich einen Prüfraum umfassen oder sich in einem solchen befinden.

Die mindestens zwei Linearantriebe dienen alle zum antreiben des Zylinders und weisen besonders vorteilhaft dieselbe Funktionsweise, Bauart und Ausführung auf. Es handelt sich also vorzugsweise um mehrere gleichartige Motoren mit identischen Spezifikationen. Das antreiben des Zylinders erfolgt durch eine synchrone Bewegung der Antriebsteile der Linearantriebe: alle zweiten Antriebsteile der Linearantriebe befinden sich immer gleichzeitig in einer nicht ausgelenkten Ausgangsstellung der Antriebe. Die nicht ausgelenkte Ausgangsstellung bezeichnet dabei eine Stellung des Linearantriebs, welche der zweiten Antriebsteil im Rahmen seiner Bewegung mit kleinstem Abstand zum ersten Antriebsteil einnehmen kann.

Ein Vorteil der erfindungsgemässen Lösung ist eine kompaktere Bauweise der Testapparatur, da mehrere Linearantriebe einen einzigen ersetzen und daher kleiner ausfallen und kompakter angeordnet werden können. Die Testapparatur kann auch einfacher gebaut werden, weil die entwickelte Wärme der Linearantriebe besser und einfacher abgeführt werden kann, da die Wärme in verschiedenen Linearantrieben anfällt und räumlich besser verteilt ist als bei einem einzigen Linearantrieb. Durch eine Verteilung der Last auf mehrere Linearantriebe wird jeder Linearantrieb weniger stark belastet, was sich positiv auf die Lebensdauer und Wartungsintervalle sowie die Häufigkeit von Pannen ausübt. Insbesondere kann durch eine Verwendung von baugleichen Linearantrieben ein Ersatzteillager klein gehalten werden, was Kosten spart. Die vereinfachte Bauweise mit mehreren räumlich verteilten Linearantrieben kann auch den Zugriff auf die Linearantriebe und andere Komponenten der Testapparatur erleichtern, was die Wartung und Reparatur bzw. auch Reinigung vereinfacht.

Als optionales Merkmal der Erfindung verlaufen Bewegungsachsen der mindestens zwei Linearantriebe parallel zur Längsachse des Zylinders.

Verlaufen die Bewegungsachsen der Linearantriebe parallel zur Längsachse des Zylinders, so kann der Zylinder auf besonders einfache Weise mit den Linearantrieben gekoppelt werden. Ausserdem stehen dadurch die Bewegungsachsen aller Linearantriebe parallel zueinander, wodurch die Linearantriebe besonders kompakt zueinander und auch relativ zum Zylinder angeordnet werden können. Zudem ist das antreiben des Zylinders besonderst effizient, wenn er in paralleler Richtung zu den Arbeitsrichtungen aller Linearantriebe bewegt wird. Ein grosser Vorteil einer parallelen Anordnung der Linearantriebe und des Zylinders ist zudem eine hohe Rotationssteifigkeit des Gesamtaufbaus.

Alternativ können die Bewegungsachsen der Linearantriebe auch nicht parallel zur Längsachse des Zylinders verlaufen und müssen insbesondere auch nicht parallel zueinander verlaufen.

Als ein weiteres optionales Merkmal der Erfindung sind die zweiten Antriebsteile und der Zylinder durch mindestens eine Brücke miteinander verbunden, wobei insbesondere der Zylinder starr mit der Brücke verbunden ist.

Eine Brücke ist eine sehr einfache und stabile Kopplung von verschiedenen Teilen und ist daher entsprechend günstig und dauerhaft. Zur Vermeidung von Zwangszuständen durch zu viele starre Verbindungen und dadurch entstehenden Risiken wie beispielsweise verkanten bzw. verkeilen von beweglichen Teile, entstehen von Spannungen innerhalb der Konstruktion oder verlangsamen bzw. blockieren von Bewegungen sind vorteilhafterweise nicht alle zweiten Antriebsteile und/oder der Zylinder starr mit der mindestens einen Brücke verbunden. Besonders vorteilhaft ist eine Verbindung aller zweiten Antriebsteile und des Zylinders durch eine einzige Brücke, wobei der Zylinder starr mit der Brücke verbunden ist, die zweiten Antriebsteile aber alle eine Verbindung mit der Brücke aufweisen, welche einerseits die Antriebskraft den Anforderungen entsprechend überträgt und andererseits Freiheitsgrade zur Verhinderung von Zwangszuständen besitzt (beispielsweise Dämpfer, Gelenke, Spiel, Flexibilität durch drehen und/oder biegen etc.).

Alternativ können die zweiten Antriebsteile und der Zylinder auch anders als durch eine Brücke miteinander gekoppelt werden, etwa durch Gelenke, Hebel, Ketten, Zahnriemen und/oder andere mechanische Mittel.

Als optionales Merkmal der Erfindung werden als Linearantrieb elektromagnetische Motoren, insbesondere servo-elektrische Linearmotoren verwendet.

Elektromagnetische Motoren und insbesondere servo-elektrische Linearmotoren haben den Vorteil, dass sie kompakte Aussenmasse aufweisen und direkt in die Testapparatur integriert werden können. Zudem benötigen elektromagnetische Motoren keine grosse Infrastruktur - ein einfacher Stromanschluss reicht (im Gegensatz zu beispielsweise hydraulischen Systemen, welche externe Wasserkühlkreisläufe und 3-Phasen-Strom-Anschlüsse voraussetzen). Durch die Verwendung von mehreren Linearantrieben ist auch die Wärmeentwicklung räumlich verteilt und die Wärme kann relativ einfach abtransportiert werden.

Servo-elektrische Linearmotoren weisen in einem ersten Antriebsteil Aktuatorspulen mit Wicklungen mit drei getrennten Phasen und als zweiten Antriebsteil einen Aktuatorkolben aus geschichteten Permanentmagneten mit abwechselnder Polung auf. Typischerweise verfügen diese servo-elektrischen Linearmotoren über drei kaskadische Regelkreise mit dieser Reihenfolge (in abnehmender Priorität): Regelung auf Position, Geschwindigkeit und Spulenstrom. Es können aber auch ein- oder zweistufige Regelkreise zum Einsatz kommen. Die Positionsbestimmung kann absolut oder relativ erfolgen.

Alternativ kann der Linearantrieb beispielsweise auch auf eine andere elektromechanische Art wie z. B. durch piezoelektrische, elektrostatische, magnetostritive oder thermoelektrische Effekte betrieben werden, oder aber auch durch Pneumatik, Hydraulik oder durch mechanische Antriebe wie etwa Rollengewinde oder Gewindestangen.

Weiters können an der Testapparatur optional die Linearantriebe einzeln durch voneinander getrennte Antriebssteuerungen gesteuert werden, wobei die Antriebssteuerungen durch eine gemeinsame Regelung gesteuert werden.

Getrennte Antriebssteuerungen der Linearantriebe haben den Vorteil, dass die einzelnen Linearantriebe individuell gesteuert werden können und insbesondere mit sofern vorhandenen Regelkreisen und Sensoren interagieren können. Dabei steuert eine gemeinsame Regelung die Antriebssteuerungen der einzelnen Linearantriebe, so dass eine Synchronisation der Linearantrieb-Bewegungen auf einer Ebene der Antriebssteuerungen durch die Regelung vorgenommen wird und die Antriebssteuerungen die konkreten Linearantrieb-Bewegungen auf einer tieferen Ebene durchführen. Auf diese Weise können komplizierte Regel- und Überwachungsmechanismen von allen Linearantrieben gleichzeitig vermieden werden.

Alternativ können die Linearantriebe alle mit derselben Antriebssteuerung betrieben werden, oder beispielsweise auch paarweise bzw. in Gruppen von mehreren Linearantrieben durch eine oder mehrere Antriebssteuerungen (die Anzahl der Linearantriebe pro Gruppe kann dabei variieren und auch verschieden grosse Gruppen umfassen).

Als weiteres optionales Merkmal der Erfindung bildet die Längsachse des Zylinders eine Rotationssymmetrieachse für die Längsachsen der Linearantriebe. Dabei weist insbesondere in mindestens einem senkrecht zur Längsachse des Zylinders verlaufenden Schnitt durch die Testapparatur eine alle Durchstichpunkte der Längsachsen der Linearantriebe durch die Schnittebene verbindende gerade Strecke oder eine alle Durchstichpunkte der Längsachsen der Linearantriebe durch die Schnittebene umspannende Fläche einen geometrischen Schwerpunkt auf, welcher auf einem geometrischen Schwerpunkt der Schnittfläche des Probenbereichs durch die Schnittebene liegt. Bei 3 oder 4 Antrieben sind die Durchstichpunkte entweder auf einer Strecke (also linear angeordnet), und dort liegt der geometrische Schwerpunkt in der Mitte der Strecke. Oder es gibt 3 bzw. 4 Durchstichpunkte auf einer Fläche verteilt, also ein Dreieck bzw. Viereck, wenn man eine die Durchstichpunkte umspannende Fläche anschaut. Diese Fläche sollte rotationssymmetrisch bezüglich des Durchstichpunkts der Zylinderlängsachse sein. Und im Schwerpunkt dieses Drei- oder Vierecks sollte dann der Schwerpunkt der Schnittfläche der Testapparatur sein, damit die die Linearantriebe symmetrisch im bezüglich des Probenbereichs angeordnet sind.

Durch eine rotationssymmetrische Anordnung der Längsachsen der Linearantriebe um die Längsachse des Zylinders ist eine besonders kompakte, robuste und durch gleichmässige Kraftverteilung möglichst verwindungs- und verkantungsfreie Bauweise der Antriebsmechanik möglich. Zudem kann die gesamte Testapparatur räumlich kompakt gebaut werden, wenn die Antriebsmechanik symmetrisch bezüglich des Probenbereichs angeordnet ist.

Alternativ können die Längsachsen der Linearantriebe auch asymmetrisch um die Längsachse des Zylinders angeordnet sein, und der geometrischen Schwerpunkt der Strecke bzw. Fläche, welche alle Durchstichpunkte der Längsachsen der Linearantriebe in der Schnittebene umfasst, muss auch nicht auf dem geometrischen Schwerpunkt der Schnittfläche des Probenbereichs in dieser Schnittebene liegen.

In einem weiteren optionalen Merkmal der Erfindung sind Lager für den Zylinder in einem separaten Lagermodul ausgebildet, wobei das Lagermodul als auswechselbarer Teil eines Lastrahmens ausgestaltet ist (z. B. indem er durch eine zerstörungsfrei lösbare Schraub- oder Steckverbindung statt durch eine nur durch Zerstörung lösbare Schweissverbindung befestigt ist).

Mindestens ein und vorzugsweise zwei Lager für den Zylinder sind in einem separaten Lagermodul zusammengefasst, welches sich relativ einfach und rasch in den Lastrahmen ein- und ausbauen lässt. Dadurch wird ein allfälliger Ersatz der Lager vereinfacht und beschleunigt, so dass eine reibungsarme und verwindungssteife Lagerung des Zylinders ermöglicht wird. Die Lager führen den Zylinder und können zur Aufnahme von möglicherweise auftretenden grossen lateralen Kräften vorteilhafterweise überdimensioniert ausgelegt werden, wobei mit überdimensioniert eine deutlich über den üblichen Sicherheitsmargen liegende Vergrösserung gemeint ist. Die Sicherheitsmargen von Prüfsystemen liegen üblicherweise bei einem Faktor 10 (beispielsweise ist ein Lager für den Zylinder üblicherweise für eine um den Faktor 10 grössere Kraft ausgelegt als die berechnete maximal angelegte Kraft). Mit überdimensioniert sind hier Faktoren zwischen berechneter maximal angelegter Kraft und Auslegung (d. h. maximaler Belastbarkeit) von mindestens Faktor 50 und insbesondere von mindestens Faktor 100 gemeint. Aufgrund der eingesetzten Kräfte und der hohen Arbeitsfrequenz sind die Lager als Verschleissteil zu betrachten, welche in regelmässigen Abständen ersetzt werden müssen. Ein unkompliziertes austauschen von Verschleissteilen ist für Wartung, Reparatur und auch für die Reinigung von Vorteil.

Das mindestens eine Lager kann aber auch direkt am Lastrahmen verbaut sein oder darin ausgeformt sein, ohne dass es in ein Lagermodul integriert ist. Es können auch Lager ohne ein einfaches Auswechseln vorgesehen sein, wobei bei mehreren Lagern auch Kombinationen von einfach und nicht einfach auswechselbaren Lagern sowie von in Modulen integrierten und nicht in Modulen integrierten Lagern möglich sind.

Als weiteres optionales Merkmal ist der Zylinder als Hohlprofil ausgestaltet und insbesondere als kreiszylindrisches Hohlprofil.

Weist der Zylinder ein Hohlprofil aus, so kann er unter Beibehaltung von hoher mechanischer Steifigkeit ein relativ geringes Gewicht aufweisen, was in einer kleinen bewegten Masse resultiert und dadurch Antriebsenergie spart, Vibrationen minimiert und weniger konstruktiven Aufwand verursacht. Besonders vorteilhaft ist der Zylinder als kreiszylindrisches Hohlprofil ausgestaltet, so dass der Zylinder einfach durch ringförmige Lager geführt werden kann. Der Zylinder kann durch die Bauweise als Hohlprofil auch sehr einfach überdimensioniert ausgestaltet werden, so dass Torsionskräfte minimiert werden können.

Alternativ kann der Zylinder auch aus einem massiven Stück bestehen, an verschiedenen Stellen verschiedene Profile aufweisen und/oder aus verschiedenen Teilen mit verschiedenen Querschnitten und aus verschiedenen Materialien (separat und/oder miteinander kombiniert) bestehen. Das Hohlprofil kann aber auch ausgefüllt sein.

Weiters kann die Testapparatur optional mindestens ein Messsystem umfassen, welches mit dem Zylinder gekoppelt ist, insbesondere eines oder mehrere folgender Messsysteme: Dehnmessstreifen, Positionsgeber (inkremental oder kontinuierlich), Kraftsensoren zur Druckkraftbestimmung.

Zur einfachen und effizienten Überwachung der mechanischen Einwirkung auf die Probe in situ und in Echtzeit sowie zur Steuerung und Regelung der Linearantriebe ist es von grossem Vorteil, den Zylinder an mindestens ein Messsystem zu koppeln. Zur Bestimmung der auf den Körper ausgeübten Kraft kann beispielsweise mindestens ein Dehnmessstreifen die Stauchung des Zylinders messen, vorzugsweise aber vier Dehnmessstreifen welche ganz besonders vorteilhaft im Innern eines Hohlprofils angebracht sind, wo die Dehnmessstreifen sowie die Kabel und ggf. elektronische Elemente vor äusseren Einwirkungen geschützt sind. Es können aber auch Kraftsensoren zur Messung eines zwischen quer zur Längsachse des Zylinders liegenden Druckplatten des Kraftsensors angelegten Drucks (beispielsweise durch kapazitive, induktive, piezoresistive oder piezoelektrische Sensoren) im oder am Zylinder befestigt werden, um den mechanischen Druck auf die Probe messen. Grundsätzlich können die Druckplatten bzw. die Kraftsensoren zwischen Probe und Zylinder und/oder zwischen Probe und einem Rand des Probenbereichs angeordnet sein.

Durch die Positionsbestimmung lassen sich Rückschlüsse auf die Deformation der Probe ziehen, was wiederum auf die auf die Probe ausgeübte Kraft schliessen lässt. Die Testapparatur kann beispielsweise mit einem inkrementellen oder kontinuierlichen Wegmesssystem ausgestattet sein. Hierbei bewegt sich typischerweise ein am Zylinder befestigter markierter Streifen gegenüber einem an der restlichen Testapparatur befestigten Sensor, wodurch sich die Position des Zylinders mit einer Genauigkeit von einem Mikrometer oder weniger messen lässt.

Alternativ kann der Zylinder auch ohne daran gekoppelte Messsysteme betrieben werden. Die Bewegung des Zylinders kann entweder gänzlich ohne Feedback des Zylinders gesteuert werden, oder es kann auch auf andere Art und Weise als oben beschrieben an Informationen bezüglich der auf die Probe ausgeübten Kraft gelangt werden. Beispielsweise kann im Fall von Linearmotoren durch den auf die Linearantriebe angelegten Strom auf die auf die Probe ausgeübte Kraft geschlossen werden. Oder die Probe wird selber mit sensorischen Systemen erfasst (z. B. können die oben genannten Messsysteme auch an die Probe gekoppelt sein: Dehnmessstreifen und/oder Druckplatten an oder um die Probe herum, markierte Streifen und Sensoren oder auch andere visuelle Erfassungsmethoden direkt an der Probe usw.).

Als weiteres optionales Merkmal weisen der Zylinder und/oder ein Rand des Probenbereichs Schnellverschlüsse auf.

Mit Schnellverschluss werden im Rahmen dieser Anmeldung Vorrichtungsteile bezeichnet, welche sich ohne komplizierte oder repetitive Bewegung miteinander kraftschlüssig verbinden und voneinander trennen lassen. Typische Schnellverschlüsse sind z. B. Quickconnect-verschlüsse, Bajonettverschlüsse, Schnappverschlüsse, Klettverschlüsse und Verschlüsse, welche durch magnetische Kräfte oder Federn, Gummibänder, Haken, Ösen oder Schlingen zusammengehalten werden. Weitere typische Schnellverschlüsse lassen sich beispielsweise durch Schieben oder Drehen, Einrasten oder gegenseitiges Verkeilen realisieren. Insbesondere können Schnellverschlüsse ohne Werkzeuge d. h. rein manuell fixiert und gelöst werden. Keine Schnellverschlüsse im Sinn der Erfindung sind Verschlüsse mit Rotationen von mehr als einer kompletten Umdrehung (wie etwa die meisten handelsüblichen Schrauben).

Schnellverschlüsse erlauben eine Befestigung von weiteren Elementen am Zylinder und/oder an einem Rand des Probenbereichs zur einfachen und schnellen Anpassung des Zylinders und/oder des Probenbereichs an die jeweilige Aufgabe. Dabei ist darauf zu achten, dass die Schnellverschlüsse den Anforderungen der jeweiligen Aufgabe an die Festigkeit der Befestigung (besonders in Bezug auf eine Beweglichkeit der verbundenen Teile und auf eine minimal nötige Haltekraft der Befestigung) entsprechen. Bei den zu befestigenden Elementen kann es sich um eine Vielzahl von verschiedenen Elementen mit unterschiedlichen Aufgaben handeln; die Elemente können beispielsweise der Befestigung der Probe dienen, können Systeme oder Teile von Systemen zur Erfassung von Messgrössen sein oder können etwa auch die Probe in eine gewünschte Umgebung bzw. unter die erwünschten Bedingungen setzen (beispielsweise in ein Flüssigkeitsbad, in eine Wärme-, Kälte und/oder Druckkammer usw.). Eine Messung wird dadurch erheblich erleichtert, da die Probe einfach und rasch im Probenbereich positioniert werden kann und die Probe einfach und rasch unter die gewünschten Bedingungen gesetzt und beobachtet werden kann.

Alternativ kann auch auf Schnellverschlüsse verzichtet werden und auf übliche Befestigungsmethoden zurückgegriffen werden, insbesondere auf Schraubverbindungen, besonders vorteilhaft über vorgefertigte Nuten, Löcher und/oder Gewindelöcher. Dabei sind auch andere Befestigungs- und/oder Zentrierelemente denkbar, welche beliebig am Zylinder und/oder einem Rand des Probenbereichs und insbesondere an einer Bodenplatte angeordnet sein können.

Als weiteres optionales Merkmal der Erfindung ist ein Adapter vorgesehen, wobei der Zylinder oder der Adapter oder beide über Befestigungsmechanismen verfügen, um Zylinder und Adapter kraftschlüssig miteinander zu verbinden. Ebenso oder alternativ dazu sind optional Einsätze vorgesehen, welche an einem Rand des Probenbereichs der Testapparatur und insbesondere an einer Bodenplatte eines den Probenbereich mindestens teilweise umfassenden Lastrahmens befestigt werden können und einer Positionierung der Probe im Probenbereich dienen.

Der Adapter dient einer Verlängerung des Zylinders, welche die Länge des Zylinders an durch verschiedene Aufgaben gestellte Anforderungen anzupassen erlaubt und dank dem Befestigungsmechanismus unkompliziert von statten geht. Besonders vorteilhaft ist ein Adapter, welcher dasselbe Profil wie der Zylinder und durch die entsprechende Grösse eine hohe Torsionsfestigkeit des Zylinders samt Adapter aufweist. Anstatt einer Anpassung der Länge des Zylinders oder aber auch zusätzlich dazu kann der Rand des Probenbereichs derart verändert werden, dass die Probe dem Zylinder angenähert werden kann. Dazu können beispielsweise Einsätze verwendet werden, welche eine einfache Anpassung des Probenbereichs erlauben und den Rand eines Probenbereichs (und insbesondere die Bodenplatte) podestartig erweitern bzw. erhöhen können , um eine Positionierung der Probe zu erleichtern.

Alternativ kann auf Adapter und/oder Einsätze verzichtet werden, oder auch nur auf die Befestigungsmechanismen.

Optional kann die Testapparatur über einen starren und nicht verstellbaren Lastrahmen verfügen, wobei der Lastrahmen den Probenbereich mindestens teilweise umschliesst.

Ein starrer Lastrahmen, welcher den Probenbereich mindestens teilweise umschliesst, erlaubt eine einfache und auch verwindungssteife Konstruktion. Ausserdem fallen im Vergleich zu herkömmlichen Aufbauten zusätzliche Antriebe zum Bewegen der Zylinder-Antriebe ebenso weg wie aufwendige Befestigungsmechanismen und/oder Sensoren.

Alternativ kann auch auf einen starren Lastrahmen verzichtet werden und der Rand des Probenbereichs verstellbar und die ersten Antriebsteile relativ zum Probenbereich bewegbar gestaltet werden.

Als weiteres optionales Merkmal der Erfindung ist die Testapparatur durch mindestens ein Gehäuse vor Beschädigung und Verschmutzung geschützt, wobei das mindestens eine Gehäuse und insbesondere ein Gehäuse in der Nähe des Probenbereichs oder diesen begrenzend mindestens teilweise staub- und wasserdicht ausgebildet ist.

Mindestens ein Gehäuse, welches mindestens einen Teil der Testapparatur umfasst, erlaubt eine einfach Reinigung und schützt die entsprechenden Teile der Testapparatur und besonders vorteilhafterweise den Rand des Probenbereichs vor Beschädigung beispielsweise durch besondere Probenbedingungen wie etwa flüssige und/oder korrosive Umgebungen. Zudem können entsprechend gut gekapselte Gehäuse die Testapparatur reinraumtauglich machen, d. h. dass die Testapparatur nach einer gründlichen Reinigung der Oberfläche des Gehäuses Reinraumstandards entspricht.

Alternativ kann auch auf Staub-, Wasserdichtheit und/oder Reinraumtauglichkeit oder gänzlich auf Gehäuse verzichtet werden.

Als weiteres optionales Merkmal der Erfindung umfasst die Testapparatur einen Prüfaufbau in Form eines Tischmodells.

Je nach Ausführungsform der Erfindung können die Bestandteile der Testapparatur in einer oder mehreren Einheiten bzw. Aufbauten zusammengefasst sein. Eine als Prüfaufbau bezeichnete Einheit umfasst mindestens Probenbereich, Linearantriebe und Zylinder der Testapparatur. Beispielsweise können aber mindestens ein Teil der Steuer- und Regelektronik in einer vom Prüfaufbau separaten Steuereinheit zusammengefasst sein, und ein vom Prüfaufbau und der Steuereinheit separater Computer kann der Bedienung dienen. Eine Trennung von Steuereinheit und Prüfaufbau ist aber nicht zwingend, so dass der Prüfaufbau auch die gesamte Steuer- bzw. Regelelektronik umfassen kann. Auch der Computer kann als eigenständiges Gerät vorgesehen oder mit anderen Bestandteilen der Testapparatur kombiniert sein.

Der Prüfaufbau ist vorteilhafterweise als Tischmodell ausgebildet, welches auf handelsüblichen Labortischen Platz eingesetzt werden kann. Weder Grösse noch Gewicht oder andere Faktoren (wie beispielsweise Abschirmungen wie Hitzeschilde oder z. B. auch Vibrationsdämpfung) seitens des Prüfaufbaus stellen dabei aussergewöhnliche Anforderungen an den Labortisch. Der Prüfaufbau ist daher kleiner als ein Kubus mit einer Kantenlänge von 1.5 Meter und überschreitet nicht ein Gewicht von 150 kg. Ein Prüfaufbau in Form eines Tischmodells spart Platz und erlaubt eine ergonomische Arbeitsweise sowie einen Einsatz der Testapparatur ohne aussergewöhnliche Anforderungen an einen Standort zu stellen.

Alternativ kann die Testapparatur auch anders ausgestaltet sein als mit einem Prüfaufbau in Form eines Tischmodells, insbesondere mit einem Prüfaufbau, welcher auf den Boden gestellt wird.

Die Erfindung umfasst auch ein Testverfahren zum Prüfen von Proben durch mechanisches einwirken auf die Probe, welches folgende Schritte umfasst: mindestens unidirektional kraftschlüssiges verbinden der Probe mit einem Rand des Probenbereichs und mindestens unidirektional kraftschlüssiges verbinden der Probe mit einem Zylinder, wobei das auslenken des Zylinders relativ zum Probenbereich durch gleichzeitiges bewegen von mindestens zwei Linearantrieben erfolgt.

Durch mindestens unidirektional kraftschlüssiges verbinden der Probe mit einem Rand des Probenbereichs und dem Zylinder kann mechanisch Kraft auf die Probe ausgeübt werden, wobei der Zylinder durch gleichzeitiges bewegen von mindestens zwei Linearantrieben erfolgt. Der Vorteil vom Einsatz mehrerer Linearantriebe ist eine Verteilung der Last auf mehrere Antriebe und dadurch eine geringere Belastung jedes einzelnen Antriebs. Zudem kann mit einem Einsatz von mehreren Motoren eine Redundanz erreicht werden, und eine grosse bewegte Masse wird auf mehrere kleine bewegte Massen aufgeteilt, was den Antriebe der totalen Masse vereinfacht und sicherheits- und betriebstechnisch von Vorteil ist.

Dabei ist es besonders vorteilhaft, wenn die Bewegung der Linearantriebe jederzeit in dieselbe Richtung erfolgt und insbesondere auch jederzeit in dieselbe Richtung wie die Bewegung des Zylinders erfolgt. Auf diese Weise sind alle Bewegungen auf relativ einfache Art und Weise miteinander verknüpfbar.

Weiters ist es auch vorteilhaft, die Bewegung des Zylinders zu kontrollieren (z. B. durch messen der auf die Probe wirkenden Kraft, der Position des Zylinders oder der

Antriebsteile, der Energiezufuhr durch die Antriebsregelungen oder ähnlichem) und gegebenenfalls nachzuregeln, insbesondere durch rückkoppeln.

Und es ist ganz besonders vorteilhaft, wenn zum erstellen der mindestens unidirektional kraftschlüssigen Verbindung von Probe und Rand des Probenbereichs bzw. Zylinder nicht die Linearantriebe relativ zum Probenbereich bewegt werden sondern der Zylinder verlängert bzw. verkürzt wird und/oder am Rand des Probenbereichs Einsätze befestigt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: einen schematischen Aufbau einer erfindungsgemässen Testapparatur in Frontansicht,
- Fig. 2: eine Explosionszeichnung eines erfindungsgemässen Prüfaufbaus in Frontansicht,
- Fig. 3: die Explosionszeichnung wie in Fig. 2, perspektivisch dargestellt,
- Fig. 4: eine Frontansicht des erfindungsgemässen Prüfaufbaus aus Fig. 2 mit Gehäuse,
- Fig. 5: eine perspektivische Darstellung des erfindungsgemässen Prüfaufbaus aus Fig. 4,

Grundsätzlich sind in den Figuren gleiche Teile mit gleichen Bezugszeichen versehen. Die Darstellungen in Frontansicht weisen die gleiche Orientierung wie die Darstellungsebene bzw. das Papier dar: die in Richtung unterer resp. oberer Papierkante liegenden dargestellten Elemente der Figuren liegen unten resp. oben. Dasselbe gilt für die Seiten: die in Richtung linker resp. rechter Papierkante liegenden dargestellten Elemente der Figuren liegen links resp. rechts.

### Wege zur Ausführung der Erfindung

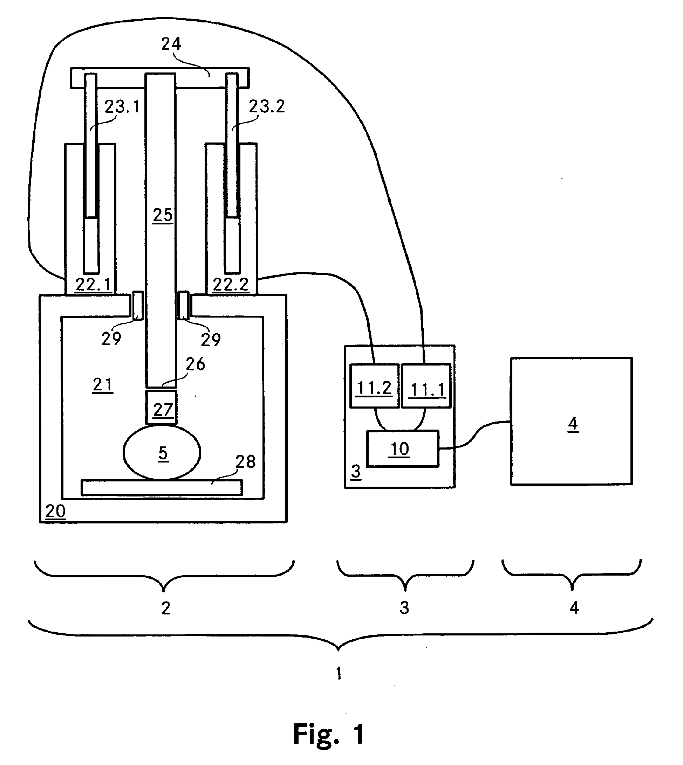

In Fig. 1 ist eine Frontansicht eines schematischen Aufbaus einer erfindungsgemässen Testapparatur 1 dargestellt. Die Testapparatur 1 ist in dieser bevorzugten Ausführungsform in drei separaten Einheiten ausgebildet: einem Prüfaufbau 2, einer Steuereinheit 3 und einem Computer 4. Beim Computer 4 handelt es sich um einen handelsüblichen Computer, welcher über ein Computerprogramm und insbesondere über ein spezifisch für die Testapparatur 1 geschriebenes Programm mit der Steuereinheit 3 kommuniziert. Das Computerprogramm dient einer Steuerung, Regelung und Überwachung der Testapparatur 1 und einer mechanischen Prüfung einer Probe 5 sowie einer Darstellung und Auswertung von Ergebnissen dieser mechanischen Prüfung. Das Computerprogramm kommuniziert zu diesem Zweck mit einer Regelung 10 der Steuereinheit 3, wobei die Regelung 10 wiederum mit zwei Antriebssteuerungen 11.1 und 11.2 interagiert. Die Antriebssteuerungen 11.1 und 11.2 steuern je einen Linearantrieb des Prüfaufbaus 2.

Der Prüfaufbau 2 umfasst einen starren Lastrahmen 20, welcher einen Probenbereich 21 mindestens teilweise umschliesst. Zwei Linearantriebe mit parallelen Längsachsen umfassen erste Antriebsteile 22.1 und 22.2 sowie zweite Antriebsteile 23.1 und 23.2, wobei die ersten Antriebsteile 22.1 und 22.2 fest mit dem Lastrahmen 20 verbunden sind. Die zweiten Antriebsteile 23.1 und 23.2 hingegen können sich relativ zum Probenbereich 21 nach unten bzw. oben bewegen, wobei die zweiten Antriebsteile 23.1 und 23.2 an ihrem vom Probenbereich 21 entfernten, oberen Ende durch eine Brücke 24 miteinander verbunden sind. An der Brücke 24 ist auch ein Zylinder 25 befestigt, dessen Längsachse zu den Längsachsen der Linearantriebe parallel ist. Der Zylinder 25 erstreckt sind von der Brücke durch den Lastrahmen 20 nach unten bis in den Probenbereich 21 hinein und endet dort in einer Zylinderstirnfläche 26. Anschliessend an die Zylinderstirnfläche 26 ist ein Adapter 27 am Zylinder 25 kraftschlüssig befestigt, wobei der Adapter 27 den Zylinder 25 in Richtung der Probe 5 nach unten verlängert und mit der Probe 5 in kraftschlüssigem Kontakt steht. Die Probe 5 steht auch mit einem Einsatz 28 in kraftschlüssigem Kontakt, wobei der Einsatz 28 an einem unteren, dem Zylinder entgegen gesetzten Ende des Probenbereichs 21 mit dem Lastrahmen 20 in kraftschlüssiger Verbindung steht. Der Zylinder 25 wird in seiner Bewegung durch ein Lagermodul 29 geführt, welches Teil des Lastrahmens 20 ist, zwei Lager umfasst und den Zylinder 25 reibungsarm und verwindungssteif lagert. Das Prüfsystem in der vorliegenden Ausführungsform ist für Axialkräfte von bis zu 2.5 kN ausgelegt. Im Prüfmaschinenbau wird normalerweise von einer bis zu 10% der Axialkraft betragenden Querkraft ausgegangen, hier also bis zu 250 N. Ein Lager hat eine statische Tragzahl von über 35 kN, ist also um einen Faktor 140 über dimensioniert.

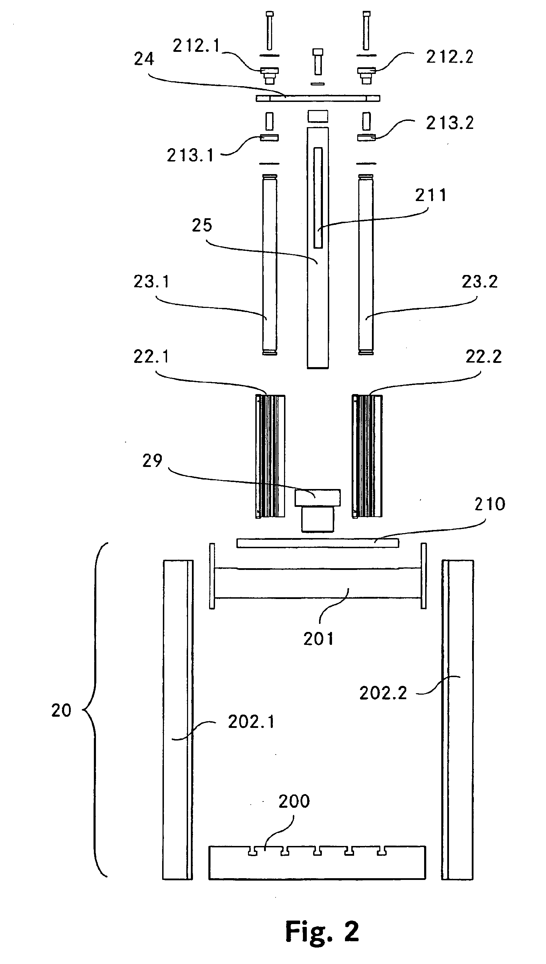

Fig. 2 zeigt eine Explosionszeichnung eines erfindungsgemässen Prüfaufbaus in Frontansicht. Der Lastrahmen 20 setzt sich zusammen aus einer Bodenplatte 200, einer Deckenplatte 201 und zwei Seitenwänden 202.1 und 202.2. Die Seitenwänden 202.1 und 202.2 sind dabei an der linken und rechten Seite der Bodenplatte 200 und der Deckenplatte 201 befestigt. Über der Deckenplatte 201 liegt eine Antriebsgrundplatte 210, auf welcher von oben die ersten Antriebsteile 22.1 und 22.2 befestigt sind. Das Lagermodul 29 ragt in montiertem Zustand durch die Antriebsgrundplatte 210 hindurch in die Deckenplatte 201 und führt den Zylinder 25 reibungsarm und verwindungssteif. Der Zylinder 25 ist als Hohlzylinder mit kreisringförmigem Querschnitt ausgebildet und weist einen Aussendurchmesser von 40 mm auf, die Lager des Lagermoduls 29 sind entsprechend gross dimensioniert. Der Zylinder 25 ist etwa drei Viertel so lang die die Seitenwände 202.1 und 202.2 hoch sind und hat einen Hub von typischerweise maximal 100 mm. Auf dem Zylinder 25 ist ein markierter Streifen 211 befestigt, welcher im Zusammenspiel mit einem Sensor eine auf 0.5 Mikrometer genaue, absolute Positionsbestimmung des Zylinders 25 erlaubt. Der markierte Streifen 211 besteht aus Gold und weist eine horizontal gestrichelte Musterung auf.

Der Zylinder 25 liegt in der Mitte der beiden zweiten Antriebsteile 23.1 und 23.2 und weist eine zu ihren Längsachsen parallele Längsachse auf. Die zweiten Antriebsteile 23.1 und 23.2 sind etwa fünf Sechstel so lang wie der Zylinder 25. Der Zylinder 25 und die zweiten Antriebsteile 23.1 und 23.2 sind an ihren oberen Enden über eine gemeinsame, horizontale Brücke 24 miteinander verbunden. Dabei ist der Zylinder 25 fest mit der Brücke 24 verschraubt, die zweiten Antriebsteile 23.1 und 23.2 hingegen sind durch obere und untere Gummipuffer 212.1 und 212.2 resp. 213.1 und 213.2 soweit mechanisch entkoppelt mit der Brücke 24 verschraubt, dass nicht durch zu viele lasttragende und starre Führungen Zwangszustände in der Konstruktion generiert werden und dass keine interne Spannungen zu einem Verkeilen der Konstruktion führen können. Die einzigen lasttragenden Lager befinden sich im Lagermodul 29.

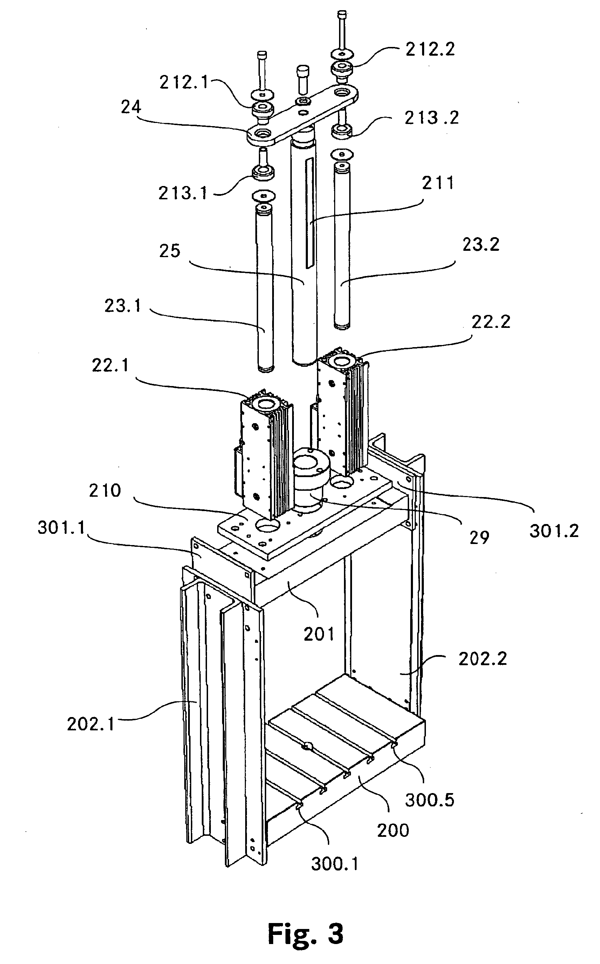

Fig. 3 zeigt denselben Prüfaufbau in einer Explosionszeichnung wie in Fig. 2 aber in perspektivischer Darstellung. Gut sichtbar sind in dieser Darstellung Nuten 300.1 bis 300.5 oben auf der Bodenplatte 200, welche zur Befestigung von Proben 5, Probenhalterungen oder Einsätzen 28 dienen. Die Bodenplatte 200 hat einen rechteckigen Grundriss, bei welchem die kurze Seite etwa halb so lang ist wie die lange Seite, und ist etwa ein Viertel so hoch wie die kurze Seite lang ist. Die Deckenplatte 201 weist etwa dieselben Dimensionen wie die Bodenplatte 200 auf, verfügt aber an der linken und rechten Schmalseite über Befestigungsplatten 301.1 und 301.2 zur Befestigung an den Seitenwänden 202.1 und 202.2. Die Seitenwände 202.1 und 202.2 sind etwa doppelt so hoch wie die lange Seite der Bodenplatte 200 und bestehen aus einer zum Probenbereich zeigenden Platte und einem auf der vom Probenbereich entfernten Seite daran befestigten U-Profil, dessen Schenkel vom Probenbereich wegweisen. Das U-Profil verleiht den Seitenwänden 202.1 und 202.2 eine hohe Stabilität.

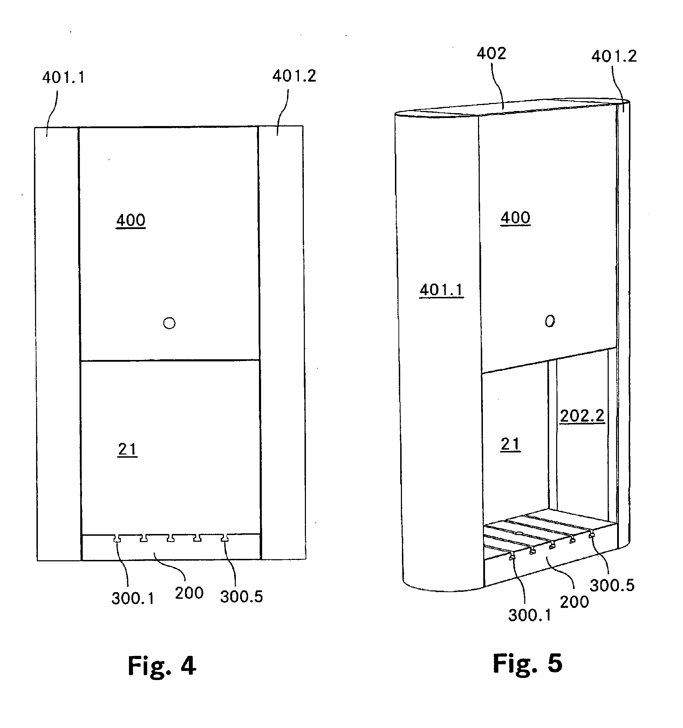

In Fig. 4 ist derselbe Prüfaufbau wie in Fig. 2 ebenfalls in einer Frontansicht dargestellt, allerdings in zusammengebautem Zustand und mit einem Gehäuse versehen. Die Bodenplatte 200 und die Befestigungsnuten 300.1 - 300.5 sind vom gegen vorne und hinten offenen Probenbereich 21 frei zugänglich am unteren Ende des Prüfaufbaus angeordnet, der grösste Teil des übrigen Prüfaufbaus hingegen ist von einem mehrteiligen Gehäuse abgedeckt. Das mehrteilige Gehäuse ist derart ausgebildet, dass keine Teile des Prüfaufbaus während allen erfindungsgemässen Bewegungen des Zylinders 25 einen durch das Gehäuse und den Probenbereich 21 aufgespannten Bereich verlassen. Der Zylinder 25 befindet sich in seiner maximal nach oben ausgelenkten Position, wodurch das untere Ende des Zylinders nicht unter dem unteren Ende der Deckenplatte herausragt und daher nicht in Fig. 4 sichtbar ist.

Auf der linken und rechten Seite umfassen ein linkes Seitengehäuse 401.1 und ein rechtes Seitengehäuse 401.2 den Prüfaufbau auf seiner gesamten Höhe. Die Seitengehäuse 401.1 - 401.2 umfassen auf den seitlichen Aussenseiten des Prüfaufbaus mindestens teilweise die Seitenwände 202.1 - 202.2 des Lastrahmens sowie alle darüberliegenden Komponenten des Prüfaufbaus bis mindestens zur höchsten Auslenkung des Zylinders 25 und aller damit verbundenen Teile. Der über dem Probenbereich 21 liegende obere Teil des Prüfaufbaus ist zwischen den Seitengehäusen 401.1 - 401.2 gegen vorne durch eine vordere Gehäuseplatte 400 abgedeckt. Die vordere Gehäuseplatte 400 ist als ebene Platte ausgebildet, welche seitlich von den Seitengehäusen 401.1 - 401.2 begrenzt ist und sich vom unteren Ende der Deckenplatte 201 bis zum oberen Ende des Prüfaufbaus erstreckt. Auf der hinteren Seite des Prüfaufbaus befindet sich an entsprechender Lage eine hintere Gehäuseplatte, welche gleich wie die vordere Gehäuseplatte 400 ausgebildet ist (in Fig. 4 nicht sichtbar).

Eine perspektivische Ansicht des in Fig. 4 dargestellten Prüfaufbaus ist in Fig. 5 abgebildet. Gut erkennbar ist die Bodenplatte 200 mit den Befestigungsnuten 300.1 - 300.5 am unteren Ende des Prüfaufbaus angeordnet und auf den seitlichen Aussenseiten des Prüfaufbaus von den Seitengehäusen 401.1 - 401.2 umschlossen. Die in einem horizontalen Schnitt betrachtet gegen aussen halbrund und vertikal gerade ausgeformten Seitengehäuse 401.1 - 401.2 umfassen die Seitenwände 202.1 - 202.2 gegen die Aussenseite des Prüfaufbaus, aber nicht gegen den Probenbereich 21. Am ihrem oberen und unteren Ende sind die Seitengehäuse 401.1 - 401.2 durch horizontale Flächen abgeschlossen. Zwischen den beiden oberen dieser horizontalen Flächen der Seitengehäuse 401.1 - 401.2 schliesst ein Gehäusedeckel 402 den Prüfaufbau gegen oben ab. Der Gehäusedeckel 402 ist als ebene Platte ausgebildet, welche seitlich von den oberen horizontalen Flächen der Seitengehäuse 401.1 - 401.2 begrenzt ist und vorne und hinten formschlüssig an die vordere Gehäuseplatte 400 und hintere Gehäuseplatte anschliesst.

Die Seitengehäuse 401.1 - 401.2, die vordere Gehäuseplatte 400 und hintere Gehäuseplatte sowie der Gehäusedeckel 402 bilden zusammen eine geschlossene Gehäusehülle, welches den Prüfaufbau gegen aussen staub- und wasserdicht abschliesst und dadurch Beschädigungen und Verschmutzung des Prüfaufbaus sowie Verletzungen von umstehenden Personen verhindert und eine einfache Reinigung des Prüfaufbaus und des Probenbereichs 21 erlaubt.

Die in den Figuren 2 - 5 dargestellte, als Tischmodell ausgebildete Ausführungsform der Testapparatur ist 1.2 m hoch, 0.6 m breit und 0.4 m tief und überschreitet nicht ein Gewicht von 80 kg. Das Tischmodell kann an dem Tisch, auf welchem es steht, befestigt werden. Dazu befinden sich Gewindelöcher auf der (auf dem Tisch aufliegenden) Unterseite der Testapparatur.

Zusammenfassend ist festzustellen, dass die oben beschriebenen Ausführungsformen die Erfindung nicht einschränken und eine Vielzahl von anderen Ausgestaltungsformen und -grössen von Testapparaturen im Sinne der Erfindung explizit von der Erfindung mit eingeschlossen sind. So können beispielsweise Prüfaufbau, Steuereinheit und Computer als separate Einheiten aber auch in beliebigen Kombinationen miteinander in verschiedenen Einheiten zusammengefasst werden. Es kann auch auf einen Computer verzichtet werden, wenn die Regelung mit anderen Mitteln zur Interaktion ausgestattet ist. Die Linearantriebe können sowohl einzeln als auch gruppenweise über eine oder mehrere Antriebssteuerungen gesteuert werden. Es kann auch mehr als eine Regelung vorhanden sein, insbesondere wenn viele Messsysteme den Ablauf der mechanischen Prüfung überwachen. Die Anzahl der Linearantriebe kann 2, 3, 4, 5 oder mehr betragen, und deren Anordnung kann in einer Ebene liegen oder auch räumlich verteilt sein (bei 3 Linearantrieben beispielsweise an den Ecken eines gleichschenkligen Dreiecks angeordnet mit senkrecht zum Dreieck stehenden Längsachsen der Linearantriebe).

Der Lastrahmen kann sowohl starr als auch in der Höhe verstellbar ausgestaltet sein, und die Längsachse des Zylinders kann eine andere Richtung als parallel zu den Längsachsen der Linearantriebe aufweisen. Die Längsachsen der Parallelantriebe müssen auch nicht parallel zueinander sein, und die Bewegungen der Linearantriebe müssen nicht synchron sein sondern können etwa zyklisch versetzt sein. Der Zylinder kann auch anders als durch eine Brücke mit den zweiten Antriebsteilen verbunden sein, beispielsweise durch Achsen und Gelenke. Der Lastrahmen kann aus beliebig vielen Stücken zusammengesetzt werden oder auch einstückig ausgestaltet sein. Grundsätzlich ist es auch möglich, dass die zweiten, angetriebenen Antriebsteile der Antriebe ortsfest bezüglich des einen ihm zugewandten Endes des Probenbereichs sind und die ersten Antriebsteile ortsfest bezüglich des Zylinders sind anstatt umgekehrt.

Zusätzlich kann eine Notfallbremse (z. B. in Form einer Backenbremse) für den Zylinder vorgesehen sein, damit bei Defekten, Stromausfall oder anderen unvorgesehenen Ereignissen eine Notfallbremse den Zylinder abbremst und/oder anhält um eine Beschädigung der Probe und/oder der Testapparatur zu verhindern.

Die Linearantriebe können statt mit Luft auch mit Wasser oder anderen Flüssigkeiten gekühlt werden, was unter Umständen bis zu 50% oder mehr Leistungssteigerung zur Folge haben kann.

Der Probenbereich kann auch durch geeignete Massnahmen bezüglich elektromagnetischer Strahlung und elektromagnetischen Feldern von den Linearmotoren und/ oder anderen stromführenden bzw. magnetischen Komponenten der Testapparatur abgeschirmt sein, insbesondere durch metallische Elemente (Schichten, Netze, usw.).

Insbesondere können die Lager für Zylinder und andere Teile wie etwa Linearantriebsteile etc. auf einer dem gelagerten Element zugewandten Seite mit einem Material mit tiefem Reibungskoeffizienten (insbesondere PTFE) beschichtet sein, wobei ganz vorteilhaft eine dem gelagerten Element zugewandte Oberfläche dieses Materials mindestens teilweise mit Nuten versehen ist (insbesondere quer zur Bewegungsrichtung des gelagerten Elements). Diese Nuten können Verschleisspartikel und/oder Abrieb aufnehmen und dadurch einer Verschmutzung des Lagers und des gelagerten Elements bzw. einer Verstopfung des Zwischenraums zwischen Lager und gelagertem Element vorbeugen.

Es ist für die Erfindung völlig irrelevant, in welche Richtung sich der Zylinder und die Linearantriebe bewegen und ob Zylinder und/oder Linearantriebe ober- oder unterhalb oder seitlich des Probenbereichs (resp. davor oder dahinter) angeordnet sind.

Das Gehäuse kann aus mehr oder weniger Teilen als oben beschrieben bestehen, insbesondere können vordere und hintere Gehäuseplatte zusammen mit dem Gehäusedeckel einteilig ausgebildet sein. Beliebige andere Aufteilungen des Gehäuses in eine beliebige Anzahl von Einzelteilen (auch einteilige Gehäuse) sind denkbar und je nach Anwendung besonders vorteilhaft. Beispielsweise weisen aus möglichst wenigen Teilen zusammengesetzte Gehäuse eine bessere Abdichtung gegenüber etwa Staub, Wasser und dergleichen auf, mehrteilige Gehäuse hingegen können vorteilhafterweise den Zugriff auf das Innenleben und dadurch die Wartung oder Reparatur erleichtern. Das Gehäuse kann die Testapparatur gänzlich oder nur teilweise umfassen, und auch der Probenbereich kann je nach Anwendung ganz, teilweise oder gar nicht vom Gehäuse umfasst sein, gegebenenfalls mit einer Öffnungsvorrichtung im Gehäuse zum Zugriff auf den Probenbereich.

## Patentansprüche

1. Testapparatur (1) zum Prüfen einer Probe (5) durch mechanische Einwirkung auf die Probe (5), umfassend
a) einen Probenbereich (21) in einem diesen mindestens teilweise umschliessenden, starren und nicht verstellbaren Lastrahmens (20)
b) einen Zylinder (25), welcher an einer Brücke (24) befestigt und relativ zum Probenbereich (21) beweglich ist,
c) einen ersten und mindestens einen weiteren Linearantrieb mit jeweils einem ersten Antriebsteil (22.1, 22.2), weicher fest mit dem Lastrahmen (20) verbunden und ortsfest bezüglich eines ihm zugewandten Endes des Probenbereichs (21) ist, und einem relativ zum ersten Antriebsteil (22.1, 22.2) beweglichen und angetriebenen zweiten Antriebsteil (23.1, 23.2), welcher ortsfest bezüglich des Zylinders (25) und relativ zum Probenbereich (21) nach unten bzw. oben bewegbar ist,
d) wobei die zweiten Antriebsteile (23.1, 23.2) an ihrem vom Probenbereich (21) entfernten, oberen Ende durch eine Brücke (24) miteinander verbunden sind,
e) wobei die Linearantriebe der Testapparatur derart angeordnet sind, dass - wenn sich ein zweiter Antriebsteil (23.1, 23.2) eines Linearantriebs in einer nicht ausgelenkten Ausgangsstellung befindet - sich auch alle anderen zweiten Antriebsteile (23.1, 23.2) der anderen Linearantriebe in ihrer nicht ausgelenkten Ausgangsstellung befinden,
**dadurch gekennzeichnet, dass**
f) der Zylinder (25) sich von der Brücke (24) durch den Lastrahmen (20) bis in den Probenbereich (21) erstreckt und
g) in seiner Bewegung durch ein Lagermodul (29) geführt ist, welches Teil des starren Lastrahmens (20) ist.

2. Testapparatur (1) nach Anspruch 1, **dadurch gekennzeichnet, dass** Bewegungsachsen der mindestens zwei Linearantriebe parallel zur Längsachse des Zylinders (25) verlaufen.

3. Testapparatur (1) nach einem der Ansprüche 1 oder 2, **dadurch gekennzeichnet, dass** die zweiten Antriebsteile (23.1, 23.2) und der Zylinder (25) durch mindestens eine Brücke (24)miteinander verbunden sind, wobei insbesondere der Zylinder (25) starr mit der Brücke (24) verbunden ist.

4. Testapparatur (1) nach einem der Ansprüche 1 - 3, **dadurch gekennzeichnet, dass** als Linearantrieb elektromagnetische. Motoren, insbesondere servo-elektrische Linearmotoren verwendet werden.

5. Testapparatur (1) nach einem der Ansprüche 1 -4, **dadurch gekennzeichnet, dass** die Linearantriebe einzeln durch voneinander getrennte Antriebssteuerungen (11.1, 11.2) gesteuert werden, und dass die Antriebssteuerungen (11.1, 11.2) durch eine gemeinsame Regelung (10) gesteuert werden.

6. Testapparatur (1) nach einem der Ansprüche 1 - 5, **dadurch gekennzeichnet, dass** die Längsachse des Zylinders (25) eine Rotationssymmetrieachse für die Längsachsen der Linearantriebe bildet, wobei insbesondere in mindestens einem senkrecht zur Längsachse des Zylinders (25) verlaufenden Schnitt durch die Testapparatur (1) eine alle Durchstichpunkte der Längsachsen der Linearantriebe durch die Schnittebene Verbindende gerade Strecke oder eine alle Durchstichpunkte der Längsachsen der Linearantriebe durch die Schnittebene umspannende Fläche einen geometrischen Schwerpunkt aufweist, welcher auf einem geometrischen Schwerpunkt der Schnittfläche des Probenbereichs (21) durch die Schnittebene liegt.

7. Testapparatur (1) nach einem der Ansprüche 1 -6, **dadurch gekennzeichnet, dass** Lager für den Zylinder (25) in einem separaten Lagermodul (29) ausgebildet sind, wobei das Lagermodul (29) als auswechselbarer Teil eines Lastrahmens (20) ausgestaltet ist.

8. Testapparatur (1) nach einem der Ansprüche 1- 7, **dadurch gekennzeichnet, dass** der Zylinder (25) als Hohlprofil ausgestaltet ist, insbesondere als kreiszylindrisches Hohlprofil.

9. Testapparatur (1) nach einem der Ansprüche 1 - 8, **dadurch gekennzeichnet, dass** die Testapparatur (1) mindestens ein Messsystem umfasst, welches mit dem Zylinder (25) gekoppelt ist, insbesondere eines oder mehrere folgender Messsysteme: Dehnmessstreifen, Positionsgeber (inkremental oder kontinuierlich), Kraftsensoren zur Druckkraftbestimmung.

10. Testapparatur (1) nach einem der Ansprüche 1 - 9, **dadurch gekennzeichnet, dass** der Zylinder (25) und/oder der Rand des Probenbereichs (21) Schnellverschlüsse aufweisen.

11. Testapparatur (1) nach einem der Ansprüche 1-10, **dadurch gekennzeichnet, dass** ein Adapter (27) vorgesehen ist und dass der Zylinder (25) oder der Adapter (27) oder beide über Befestigungsmechanismen verfügen, um Zylinder (25) und Adapter (27) kraftschlüssig miteinander zu verbinden und/oder dass Einsätze (28) vorgesehen sind, welche an einem Rand des Probenbereich (21) der Testapparatur (1) und insbesondere an einer Bodenplatte (200) eines den Probenbereich (21) mindestens teilweise umfassenden Lastrahmens (20) befestigt werden können und einer Positionierung der Probe (5) im Probenbereich (21) dienen.

12. Testapparatur (1) nach einem der Ansprüche 1-11, **dadurch gekennzeichnet, dass** die Testapparatur (1) durch mindestens ein Gehäuse vor Beschädigung und Verschmutzung geschützt, wobei das mindestens eine Gehäuse und insbesondere ein
Gehäuse in der Nähe des Probenbereichs (21) oder diesen begrenzend mindestens teilweise staub- und wasserdicht ausgebildet ist.

13. Testapparatur (1) nach einem der Ansprüche 1-12, **dadurch gekennzeichnet, dass** die Testapparatur (1) einen Prüfaufbau (2) in Form eines Tischmodells umfasst.

14. Testverfahren (1) zum Prüfen von Proben (5) durch mechanisches Einwirken auf die Probe (5), mit einer Testapparatur nach einem der Ansprüche 1 bis 13, welches folgende Schritte umfasst:
a) mindestens unidirektional kraftschlüssiges Verbinden der Probe (5) mit einem Rand des Probenbereichs (21) und
b) mindestens unidirektional kraftschlüssiges Verbinden der Probe (5) mit einem
Zylinder (25),
wobei
c) das Auslenken des Zylinders (25) relativ zum Probenbereich (21) durch gleichzeitiges Bewegen von mindestens zwei Linearantrieben erfolgt.

## Claims

1. Test apparatus (1) for the testing of a sample (5) by mechanical action upon the sample (5), comprising
a) a sample region (21) in an at least partially surrounding it, rigid and nonadjustable load frame (20), and
b) a cylinder (25), which is fastened to a bridge (24) and is movable In relation to the sample region (21),
c) a first and at least one further linear drive, each with a first drive part (22.1,22,2), which is connected firmly to the load frame (20) and is fixed with respect to an end of the sample region (21) which faces it, and with a second drive part (23.1, 23.2), which is movable In relation to the first drive part (22.1, 22.2) and is driven and which Is fixed with respect to the cylinder (25) and can be moved downward and upward respectively in relation to the sample region (21),
d) the second drive parts (23.1, 23.2) being connected to one another by means of a bridge (24) at their upper end remote from the sample region (21),
e) the linear drives of the test apparatus being arranged such that, when a second drive part (23.1, 23.2) of one linear drive is in a non-deflected initial position, all the other second drive parts (23.1, 23.2) of the other linear drives are also in their non-deflected initial position,
**characterized in that**
f) the cylinder (25) extends from the bridge (24) through the load frame (20) into the sample region (21), and
g) is guided in its movement by a bearing module (29) which is part of the rigid load frame (20).

2. Test apparatus (1) according to claim 1, **characterized in that** movement axes of the at least two linear drives run parallel to the longitudinal axis of the cylinder (25).

3. Test apparatus (1) according to one of the claims 1 or 2, **characterized in that** the second drive parts (23.1, 23.2) and the cylinder (25) are connected to one another by means of at least one bridge (24), in particular the cylinder (25) being connected rigidly to the bridge (24).

4. Test apparatus (1) according to one of the claims 1 - 3, **characterized In that** electromagnetic motors, in particular servoelectric linear motors, are used as the linear drive.

5. Test apparatus (1) according to one of the claims 1 - 4, **characterized in that** the linear drives are controlled Individually by separate drive controls (11.1, 11.2), and **in that** the drive controls (11.1,11.2) are controlled by a joint automatic control system (10).

6. Test apparatus (1) according to one of the claims 1 - 5, **characterized In that** the longitudinal axis of the cylinder (25) forms a rotational axis of symmetry for the longitudinal axes of the linear drives, wherein, In particular, in at least one section through the test apparatus (1) running perpendicularly to the longitudinal axis of the cylinder (25), a straight line connecting all the points of penetration of the longitudinal axes of the linear drives through the sectional plane or an area spanning all the points of penetration of the longitudinal axes of the linear drives through the sectional plane has a geometric center of gravity which Iles on a geometric center of gravity of the sectional area of the sample region (21) through the sectional plane.

7. Test apparatus (1) according to one of the claims 1 - 6, **characterized in that** bearings for the cylinder (25) are formed In a separate bearing module (29), the bearing module (29) being configured as an exchangeable part of a load frame (20).

8. Test apparatus (1) according to one of the claims 1 - 7, **characterized in that** the cylinder (25) is configured as a hollow profile, in particular as a circular-cylindrical hollow profile.

9. Test apparatus (1) according to one of the claims 1 - 8, **characterized in that** the test apparatus (1) comprises at least one measurement system which Is coupled to the cylinder (25), in particular one or more of the following measurement systems: strain gauges, position transmitters (incremental or continuous), force sensors for determining pressure force.

10. Test apparatus (1) according to one of the claims 1 - 9, **characterized in that** the cylinder (25) and/or the margin of the sample region (21) have/has quick-action fastenings.

11. Test apparatus (1) according to one of the claims 1-10, **characterized in that** an adapter (27) is provided, and **In that** the cylinder (25) or the adapter (27) or both have fastening mechanisms in order to connect the cylinder (25) and adapter (27) force-fittedly to one another, and/or **in that** inserts (28) are provided which can be fastened to a margin of the sample region (21) of the test apparatus (1) and, in particular, to a baseplate (200) of a load frame (20) at least partially surrounding the sample region (21) and serve for positioning the sample (5) in the sample region (21).

12. Test apparatus (1) according to one of the claims 1 - 11, **characterized in that** the test apparatus (1) is protected against damage and soiling by at least one housing, the at least one housing and, In particular, a housing In the vicinity of the sample region (21) or delimiting the latter being designed to be at least partially dust-proof and watertight.

13. Test apparatus (1) according to one of the claims 1-12, **characterized in that** the test apparatus (1) comprises a test set-up (2) in the form of a desk model.

14. Test method (1) for the testing of samples (5) by mechanical action upon the sample (5) with a test apparatus according to one of the claims 1 - 13, which comprises the following steps:
a) at least unidirectionally nonpositive connection of the sample (5) to a margin of the sample region (21) and
b) at least unidirectionally nonpositive connection of the sample (5) to a cylinder (25),
In which
c) the deflection of the cylinder (25) in relation to the sample region (21) takes place as a result of the simultaneous movement of at least two linear drives.

## Revendications

1. Appareil de test (1) pour la vérification d'un échantillon (5) par action mécanique sur l'échantillon (5), comprenant
a) une région d'échantillon (21) dans un cadre de charge rigide et non déplaçable (20), entourant celle-ci au moins en partie,
b) un cylindre (25), fixé à un pont (24) et déplaçable par rapport à la région d'échantillon (21),
c) un premier et au moins un entraînement linéaire supplémentaire avec à chaque fois une première partie d'entraînement (22.1, 22.2) qui est connectée fixement au cadre de charge (20) et qui est fixée en position par rapport à une extrémité de la région d'échantillon (21) tournée vers lui, et avec une deuxième partie d'entraînement (23.1, 23.2) entraînée et déplaçable par rapport à la première partie d'entraînement (22.1, 22.2),
qui est fixée en position par rapport au cylindre (25) et déplaçable vers le bas ou vers le haut par rapport à la région d'échantillon (21),
d) les deuxièmes parties d'entraînement (23.1, 23.2) étant connectées l'une à l'autre au niveau de leur extrémité supérieure éloignée de la région d'échantlllon (21) par un pont (24),
e) les entraînements linéaires de l'appareil de test étant disposés de telle sorte que lorsqu'une deuxième partie d'entraînement (23.1, 23.2) d'un entraînement linéaire se trouve dans une position de départ non déviée, toutes les autres deuxièmes parties d'entraînement (23.1, 23.2) des autres entraînements linéaires se trouvent aussi dans leur position de départ non déviée,
**caractérisé en ce que**
f) le cylindre (25) s'étend depuis le pont (24) à travers le cadre de charge (20) Jusque dans la région d'échantillon (21) et
g) est guidé lors de son déplacement par un module de palier (29) qui fait partie du cadre de charge rigide (20).

2. Appareil de test (1) selon la revendication 1, **caractérisé en ce que** des axes de déplacement des au moins deux entraînements linéaires s'étendent parallèlement à l'axe longitudinal du cylindre (25).

3. Appareil de test (1) selon l'une quelconque des revendications 1 ou 2, **caractérisé en ce que** les deuxièmes parties d'entraînement (23.1, 23.2) et le cylindre (25) sont connectés ensemble par au moins un pont (24), le cylindre (25) étant notamment connecté rigidement au pont (24).

4. Appareil de test (1) selon l'une quelconque des revendications 1 à 3, **caractérisé en ce que** l'on utilise comme entraînement linéaire des moteurs électromagnétiques, notamment des servomoteurs linéaires électriques.

5. Appareil de test (1) selon l'une quelconque des revendications 1 à 4, **caractérisé en ce que** les entraînements linéaires sont commandés individuellement par des commandes d'entraînement (11.1, 11.2) séparées les unes des autres, et **en ce que** les commandes d'entraînement (11.1, 11.2) sont commandées par une régulation commune (10).

6. Appareil de test (1) selon l'une quelconque des revendications 1 à 5, **caractérisé en ce que** l'axe longitudinal du cylindre (25) forme un axe de symétrie de révolution pour les axes longitudinaux des entraînements linéaires, une section droite reliant tous les points de perçage des axes longitudinaux des entraînements linéaires à travers le plan de coupe notamment dans au moins une coupe à travers l'appareil de test (1) s'étendant perpendiculairement à l'axe longitudinal du cylindre (25) ou une surface comprenant tous les points de perçage des axes longitudinaux des entraînements linéaires à travers le plan de coupe présentant un centre de gravité géométrique qui se situe sur un centre de gravité géométrique de la surface de coupe de la région d'échantillon (21) à travers le plan de coupe.

7. Appareil de test (1) selon l'une quelconque des revendications 1 à 6, **caractérisé en ce que** des paliers pour le cylindre (25) sont réalisés dans un module de palier séparé (29), le module de palier (29) étant configuré sous forme de pièce remplaçable d'un cadre de charge (20).

8. Appareil de test (1) selon l'une quelconque des revendications 1 à 7, **caractérisé en ce que** le cylindre (25) est configuré sous forme de profilé creux, notamment sous forme de profilé creux cylindrique circulaire.

9. Appareil de test (1) selon l'une quelconque des revendications 1 à 8, **caractérisé en ce que** l'appareil de test (1) comprend au moins un système de mesure qui est accouplé au cylindre (25), notamment un ou plusieurs des systèmes de mesure suivants : un ruban de mesure d'extension, un capteur de position (incrémental ou continu), des capteurs de force pour déterminer la force de pression.

10. Appareil de test (1) selon l'une quelconque des revendications 1 à 9, **caractérisé en ce que** le cylindre (25) et/ou le bord de la région d'échantillon (21) présentent des raccords rapides.

11. Appareil de test (1) selon l'une quelconque des revendications 1 à 10, **caractérisé en ce qu'**un adaptateur (27) est prévu et **en ce que** le cylindre (25) ou l'adaptateur (27) ou les deux disposent de mécanismes de fixation afin de connecter l'un à l'autre par engagement par force le cylindre (25) et l'adaptateur (27) et/ou **en ce que** des inserts (28) sont prévus, lesquels peuvent être fixés à un bord de la région d'échantillon (21) de l'appareil de test (1) et notamment à une plaque de fond (200) d'un cadre de charge (20) entourant au moins en partie la région d'échantillon (21) et servent à un positionnement de l'échantillon (5) dans la région d'échantillon (21).

12. Appareil de test (1) selon l'une quelconque des revendications 1 à 11, **caractérisé en ce que** l'appareil de test (1) est protégé par au moins un boîtier contre les endommagements et les salissures, l'au moins un boîtier et notamment un boîtier étant réalisé à proximité de la région d'échantillon (21) ou en délimitant celle-ci, de manière au moins en partie étanche à la poussière et à l'eau.

13. Appareil de test (1) selon l'une quelconque des revendications 1 à 12, **caractérisé en ce que** l'appareil de test (1) comprend une structure de vérification (2) sous la forme d'un module de table.

14. Procédé de test (1) pour la vérification d'échantillons (5) par action mécanique sur l'échantillon (5), comprenant un appareil de test selon l'une quelconque des revendications 1 à 13, qui comprend les étapes suivantes :
a) connexion par engagement par force au moins unidirectionnelle de l'échantillon (5) à un bord de la région d'échantillon (21) et
b) connexion par engagement par force au moins unidirectionnelle de l'échantillon (5) à un cylindre (25),
c) la déviation du cylindre (25) par rapport à la région d'échantillon (21) s'effectuant par déplacement simultané d'au moins deux entraînements linéaires.
